# EUROPÄISCHE PATENTSCHRIFT

(11) **EP 1 820 689 B1**
(45) Veröffentlichungstag und Bekanntmachung des Hinweises auf die Patenterteilung: **12.11.2008**
(21) Anmeldenummer: 07003267.7
(22) Anmeldetag: 16.02.2007
(51) Int. Cl.: B60N 2/46

(54) **Verstellbare Armlehne**
Adjustable armrest
Accoudoir réglable

(30) Priorität: 21.02.2006 DE 102006007893
(43) Veröffentlichungstag der Anmeldung: 22.08.2007
(73) Patentinhaber: AB SKF, 415 50 Göteborg (SE)
(72) Erfinder: Gransow, Anita, 97526 Sennfeld (DE); Edelmann, Ludwig, 97717 Sulzthal (DE)
(74) Vertreter: Kohl, Thomas

(56) Entgegenhaltungen:
- DE-A1- 3 930 270
- DE-U1- 29 909 044

## Beschreibung

Die Erfindung betrifft eine Armlehne mit einem stationären Grundteil und einem gegenüber dem Grundteil lageverstellbaren Oberteil, wobei das Grundteil und das Oberteil mittels eines Antriebsmechanismus zur Lageverstellung des Oberteils mechanisch miteinander verbunden sind, und der Antriebsmechanismus eine Spindel zur Umsetzung einer Rotationsbewegung in eine Längsbewegung umfasst.

Eine derartige Armlehne ist beispielsweise aus der DE 299 09 044 U1 bekannt. Beschrieben wird eine höhenverstellbare Armlehne für einen Fahrzeugsitz, bei dem der Antriebsmechanismus eine starre Gewindespindel enthält, die in einer am Grundteil drehantreibbar angebrachten Umlaufmutter geführt ist. Um während der Verstellbewegung ein Einklemmen eines Körperteils des Benutzers, beispielsweise des Arms oder der Hand, und auch einen anderweitigen Missbrauch zu verhindern, ist bei der bekannten Armlehne eine Überlasterkennung mit einer Steuereinheit vorgesehen, die bei einer erkannten Überlast den antreibenden Elektromotor abschaltet. Der verwendete Antriebsmechanismus und auch die eingesetzte Überlasterkennung sind mit einem erheblichen Aufwand verbunden.

Die Aufgabe der Erfindung besteht deshalb darin, eine Armlehne der eingangs bezeichneten Art anzugeben, bei der die Lageverstellung mit einfachen Mitteln erreicht wird.

Zur Lösung dieser Aufgabe wird eine Armlehne entsprechend den Merkmalen des Patentanspruchs 1 angegeben. Die erfindungsgemäße Armlehne ist dadurch gekennzeichnet, dass die Spindel als Federspindel ausgebildet ist, und ein Mitnehmer in einen Federbereich der Federspindel eingreift, sodass eine Rotation der Federspindel oder des Mitnehmers um eine Drehachse zu einer relativen Längsverschiebung zwischen der Federspindel und dem Mitnehmer in Richtung der Drehachse führt.

Der insbesondere als (Feder-)Spindelantrieb ausgebildete Antriebsmechanismus mit der erfindungsgemäß vorgesehenen Federspindel lässt sich deutlich einfacher herstellen als die bekannten Antriebsmechanismen für Armlehnen, bei denen Gewinde- oder Umlaufspindeln zum Einsatz kommen. Vor allem die Federspindel, die vorzugsweise und im Wesentlichen als einfache Schraubenfeder realisiert werden kann, verursacht nur einen geringen Fertigungsaufwand. Außerdem ist auch das Zusammenwirken zwischen der Federspindel und dem Mitnehmer sehr einfach ausgestaltet und lässt sich somit technisch leicht umsetzen.

Ein weiterer Vorteil besteht darin, dass die Federspindel aufgrund ihres elastischen Verhaltens einen inhärenten Einklemm- und/oder Missbrauchschutz umfasst. Letzterer lässt sich über die Auswahl und Dimensionierung der für die Federspindel verwendeten Feder problemlos einstellen. Sobald sich ein Körperteil oder ein anderer Gegenstand während der Betätigung des Antriebsmechanismus im Wirkungsbereich des zu verstellenden Oberteils befindet und eingeklemmt zu werden droht, wird zunächst die Feder zusammengedrückt, und die Klemmkraft auf das Körperteil nimmt spürbar, aber nicht allzu schnell zu. In jedem Fall bleibt genügend Reaktionszeit, um das gefährdete Körperteil aus dem Klemmbereich herauszuziehen.

Bei den bekannten Antriebsmechanismen mit den Gewinde- oder Umlaufspindeln erfolgt die Klemmkrafteinwirkung dagegen praktisch unmittelbar, sodass keine vergleichbare Reaktionszeit verbleibt und ein gesonderter

Überlastschutz vorgesehen ist. Bei der erfindungsgemäßen Armlehne erübrigen sich derartige gesondert vorzusehende Sicherheitsvorkehrungen, die auch sehr aufwändige Komponenten wie eine Rutschkupplung, Drucksensoren, und/oder eine elektronische Abregelung des antreibenden Elektromotors umfassen können. Auch dies reduziert den Herstellungsaufwand. Die erfindungsgemäße Armlehne weist eine sehr preisgünstige Bauform auf.

Vorteilhafte Ausgestaltungen der erfindungsgemäßen Armlehne ergeben sich aus den Merkmalen der von Anspruch 1 abhängigen Ansprüche.

Bei einer bevorzugten Variante mündet die insbesondere am Grundteil drehantreibbar gelagerte Federspindel an einem ersten axialen Ende des Federbereichs in einen ersten axialen, insbesondere als Anschlussstab ausgebildeten Wellenbereich. Letzterer ist zumindest teilweise in einem Futter eines am Grundteil gelagerten Drehantriebs, beispielsweise eines Elektromotors, aufgenommen. So ergibt sich eine einfache mechanische Kopplung der Federspindel an den Drehantrieb. Aufwändige mechanische Getriebe oder andere Mittel zur Kraft- oder Drehmomentübertragung oder -umlenkung sind nicht erforderlich.

Außerdem kann die Federspindel vorzugsweise auch an einem zweiten axialen Ende des Federbereichs in einen zweiten axialen, insbesondere als Anschlussstab ausgebildeten Wellenbereich münden. Der zweite axiale Wellenbereich ist am Grundteil drehbar gelagert. Dann ist jedes axiales Ende der Federspindel gelagert. Diese doppelte Lagerung erhöht die Stabilität des Gesamtaufbaus. Grundsätzlich wäre aber auch eine nur einseitige Lagerung möglich.

Vorzugsweise ist die Federspindel als Zug- oder Druckfeder, insbesondere als Sonder-Druckfeder, ausgeführt. Dabei handelt es sich um eine einfach herzustellende oder problemlos erhältliche Standard-Komponente, die sich außerdem auch sehr leicht an die spezifischen Klemmschutzerfordernisse anpassen lässt.

Bei einer weiteren günstigen Ausgestaltung ist der insbesondere am Oberteil angebrachte Mitnehmer aus einem Federblech gebildet. Das dann ebenfalls elastische Verhalten des Mitnehmers unterstützt den aufgrund der Elastizität der Federspindel bereits vorhandenen inhärenten Klemmschutz zusätzlich. Dadurch ergeben sich mehr Freiheitsgrade für die Dimensionierung des Gesamtaufbaus.

Weiterhin ist der Mitnehmer bevorzugt U-förmig ausgebildet und weist zwei U-Schenkel auf, die beide in den Federbereich eingreifen. So resultiert eine sehr einfache Anbindung des Mitnehmers an die Federspindel, wodurch weiterhin mit Vorteil die Anbindung spielfrei gestaltet ist.

Im Zusammenhang mit einer anderen günstigen Ausgestaltung ist der Federbereich schraubenförmig ist und weist mehrere Windungen auf, und die U-Schenkel greifen zu beiden Seiten einer der Windungen ein. Auf diese Weise wird eine sehr gute Führung des Mitnehmers erreicht. Diese Ausgestaltung der Führung ist sicherer als bei nur einem einzigen Eingriff.

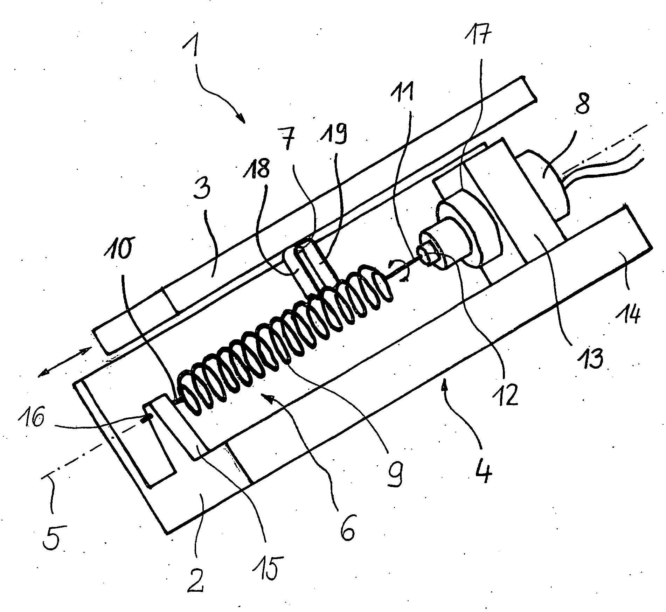

Weitere Merkmale, Vorteile und Einzelheiten der Erfindung ergeben sich aus der nachfolgenden Beschreibung eines Ausführungsbeispiels anhand der Zeichnung. Die einzige Figur zeigt ein Ausführungsbeispiel einer lageverstellbaren Armlehne mit einem Federspindel-Antrieb.

Beim dargestellten Ausführungsbeispiel einer Armlehne 1 handelt es sich um eine Anwendung aus dem Kfz-Bereich. Die Armlehne 1 gehört zu einem nicht näher gezeigten Fahrzeugsitz. Sie umfasst als Hauptbestandteile ein als Untertisch ausgeführtes stationäres Grundteil 2, ein als Obertisch und insbesondere als eigentliche Armauflage ausgeführtes Oberteil 3 sowie einen Antriebsmechanismus in Form eines Federspindelantriebs 4.

Das Grundteil 2 ist der Unterbau der Armlehne 1 und fest mit dem Fahrzeug verbunden. Die Befestigung erfolgt insbesondere am Mitteltunnel im Fahrgastinnenraum des Fahrzeugs. Demgegenüber ist das Oberteil 3 nicht stationär, sondern lageverstellbar ausgebildet. Es lässt sich relativ zum Grundteil 2 axial, also in Richtung einer Drehachse 5, hin- und herbewegen. Diese Lageverstellbarkeit des Oberteils 3 ist in der Figur durch den Doppelpfeil angedeutet.

Der Antrieb für die Lageverstellung des Oberteils 3 erfolgt mittels des Federspindelantriebs 4, der das Oberteil 3 mechanisch verstellbar mit dem Grundteil 2 koppelt. Der Federspindelantrieb 4 umfasst eine um die Drehachse 5 drehbare Federspindel 6, einen Mitnehmer 7 und einen Drehantrieb in Form eines Elektromotors 8. Die Federspindel 6 ist als Sonder-Druckfeder ausgeführt. Sie hat einen mittleren Federbereich 9 und am vorderen und hinteren Ende jeweils einen stabförmigen, axial verlaufenden Wellenbereich 10 bzw. 11. Im Federbereich 9 ist die Federspindel 6 schraubenförmig nach Art einer Schraubenfeder ausgebildet. Sie weist dort mehrere Windungen auf.

Der hintere Wellenbereich 11 sitzt teilweise in einem Futter 12 des Elektromotors 8. Letzterer ist mittels eines hinteren Lagerblocks 13 am Grundteil 2 befestigt. Der hintere Lagerblock 13 ist mit einer Grundplatte 14 des Grundteils 2 verbunden. Er hat eine durchgehende Öffnung 17, durch die der Elektromotor 8 gesteckt ist und in der er aufgenommen ist.

Der vordere Wellenbereich 10 ist drehbar in einem vorderen Lagerblock 15 des Grundteils 2 gelagert. Er ist durch eine Bohrung 16 im vorderen Lagerblock 15 hindurch geführt. Auch der vordere Lagerblock 15 ist mit der Grundplatte 14 verbunden.

Der Mitnehmer 7 ist fest am Oberteil 3 montiert. Er besteht aus einem U-förmig gebogenen Federblech und weist zwei parallele U-Schenkel 18 und 19 auf, die sich senkrecht vom Oberteil 3 weg erstrecken. Mit ihren vom Oberteil 3 abgewandten Enden greifen die U-Schenkel 18 und 19 in den Federbereich 9 der Federspindel 6 ein. Die Enden der U-Schenkel 18 und 19 sind zu beiden Seiten einer der Windungen der Federspindel 6 angeordnet.

Im Folgenden werden die Funktionsweise und besondere Vorteile der lageverstellbaren Armlehne 1 näher beschrieben.

Bei Betätigung eines nicht gezeigten Schalters wird der Elektromotor 8 in Betrieb gesetzt, sodass sein Futter 12 und damit auch die darin eingespannte Federspindel 6 in eine Links- oder Rechtsrotation um die Drehachse 5 versetzt werden. Aufgrund der Drehbewegung werden die in den Federbereich 9 eingreifenden U-Schenkel 18 und 19 und folglich auch das mit dem Mitnehmer 7 fest verbundene Oberteil 3 axial in Richtung der Drehachse 5 verschoben. Dabei wirkt der Mitnehmer 7 wie ein federndes Gleitblech, das längs der Windungen der sich drehenden Federspindel 6 entlang geschoben wird. Je nach Drehrichtung, die in der Figur durch einen Doppelrotationspfeil angedeutet ist, erfolgt eine Längsverschiebung des Oberteils 3 in die eine oder die andere Richtung.

Der Eingriff der U-Schenkel 18 und 19 in die Windungen der Federspindel 6 stellt eine einfach und kostengünstig zu realisierende mechanische Anbindung des Mitnehmers 7 an die Federspindel 6 dar. Auf diese Weise erfolgt eine wirksame mechanische Kopplung zwischen dem Oberteil 3 und dem Grundteil 2, die eine Relativbewegung erlaubt. Diese Kopplung ist insbesondere im Anwendungsbereich der verstellbaren Kfz-Armlehnen absolut ausreichend, da hier nur kurze Betriebszeiten und auch nur niedrige Verschiebegeschwindigkeiten vorkommen.

Aufgrund des elastischen Verhaltens sowohl der Federspindel 6 als auch des Mitnehmers 7 verfügt die Armlehne 1 über einen inhärenten Einklemmschutz. Wird ein Körperteil des Benutzers eingeklemmt, erfolgt dies mit langsam ansteigender Kraftwirkung. Die Windungen der Federspindel 6 werden zusammengedrückt, und die elastischen U-Schenkel 18 und 19 verbiegen sich. Der Benutzer spürt dies und kann das Körperteil aus dem Klemmbereich herausziehen, noch ehe die Klemmkraft so groß wird, dass es zu Verletzungen kommt. Die Federspindel 6 und der Mitnehmer 7 sind so dimensioniert, dass hierzu eine ausreichend große Reaktionszeit zur Verfügung steht. Demnach sind insbesondere bei dem genannten Anwendungsfall der elektrisch verstellbaren Kfz-Armlehnen gesonderte Sicherheitsvorkehrungen, wie beispielsweise ein Überlastschutz, nicht erforderlich.

## Patentansprüche

1. Armlehne mit einem stationären Grundteil (2) und einem gegenüber dem Grundteil (2) lageverstellbaren Oberteil (3), wobei
a) das Grundteil (2) und das Oberteil (3) mittels eines Antriebsmechanismus (4) zur Lageverstellung des Oberteils (3) mechanisch miteinander verbunden sind,
b) der Antriebsmechanismus (4) eine Spindel (6) zur Umsetzung einer Rotationsbewegung in eine Längsbewegung umfasst,
**dadurch gekennzeichnet, dass**
c) die Spindel als Federspindel (6) ausgebildet ist, und ein Mitnehmer (7) in eine Federbereich (9) der Federspindel (6) eingreift, sodass eine Rotation der Federspindel (6) oder des Mitnehmers (7) um eine Drehachse (5) zu einer relativen Längsverschiebung zwischen der Federspindel (6) und dem Mitnehmer (7) in Richtung der Drehachse (5) führt.

2. Armlehne nach Anspruch 1, **dadurch gekennzeichnet, dass** die insbesondere am Grundteil (2) drehantreibbar gelagerte Federspindel (6) an einem ersten axialen Ende des Federbereichs (9) in einen ersten axialen Wellenbereich (11) mündet, der zumindest teilweise in einem Futter (12) eines am Grundteil (2) gelagerten Drehantriebs (8) aufgenommen ist.

3. Armlehne nach Anspruch 2, **dadurch gekennzeichnet, dass** die Federspindel an einem zweiten axialen Ende des Federbereichs (9) in einen zweiten axialen Wellenbereich (10) mündet, der am Grundteil (2) drehbar gelagert ist.

4. Armlehne nach Anspruch 1, **dadurch gekennzeichnet, dass** die Federspindel (6) als Zug- oder Druckfeder ausgeführt ist.

5. Armlehne nach Anspruch 1, **dadurch gekennzeichnet, dass** der insbesondere am Oberteil (3) angebrachte Mitnehmer (7) aus einem Federblech gebildet ist.

6. Armlehne nach Anspruch 1, **dadurch gekennzeichnet, dass** der Mitnehmer (7) U-förmig ausgebildet ist und zwei U-Schenkel (18, 19) aufweist, die beide in den Federbereich (9) eingreifen, so dass der Mitnehmer (7) spielfrei mit der Federspindel (6) zusammenwirkt.

7. Armlehne nach Anspruch 6, **dadurch gekennzeichnet, dass** der Federbereich (9) schraubenförmig ausgebildet ist und mehrere Windungen aufweist, und die U-Schenkel (18, 19) zu beiden Seiten einer der Windungen eingreifen.

## Claims

1. Armrest with a stationary basic part (2) and an upper part (3) which can be adjusted in position in relation to the basic part (2), wherein
a) the basic part (2) and the upper part (3) are mechanically connected to each other by means of a driving mechanism (4) for the adjustment of the position of the upper part (3), and
b) the driving mechanism (4) comprises a spindle (6) for converting a rotational movement into a longitudinal movement,
**characterized in that**
c) the spindle is designed as a spring spindle (6), and a driver (7) engages in a spring region (9) of the spring spindle (6) such that rotation of the spring spindle (6) or of the driver (7) about an axis of rotation (5) leads to a relative longitudinal displacement between the spring spindle (6) and the driver (7) in the direction of the axis of rotation (5).

2. Armrest according to Claim 1, **characterized in that** the spring spindle (6) which is mounted in a rotational drivable manner in particular on the basic part (2) opens out at a first axial end of the spring region (9) into a first axial shaft region (11) which is at least partially accommodated in a chuck (12) of a rotary drive (8) mounted on the basic part (2).

3. Armrest according to Claim 2, **characterized in that** the spring spindle opens out at a second axial end of the spring region (9) into a second axial shaft region (10) which is mounted rotatably on the basic part (2).

4. Armrest according to Claim 1, **characterized in that** the spring spindle (6) is designed as a tensional compression spring.

5. Armrest according to Claim 1, **characterized in that** the driver (7) which is mounted in particular on the upper part (3) is formed from a spring steel sheet.

6. Armrest according to Claim 1, **characterized in that** the driver (7) is of U-shaped design and has two U limbs (18, 19) which both engage in the spring region (9) such that the driver (7) interacts in a play-free manner with the spring spindle (6).

7. Armrest according to Claim 6, **characterized in that** the spring region (9) is of helical design and has a plurality of coils, and the U limbs (18, 19) engage on both sides of one of the coils.

## Revendications

1. Accoudoir comprenant une partie de base stationnaire (2) et une partie supérieure (3) réglable par rapport à la partie de base (2),
a) la partie de base (2) et la partie supérieure (3) étant connectées l'une à l'autre mécaniquement au moyen d'un mécanisme d'entraînement (4) pour le réglage de la partie supérieure (3),
b) le mécanisme d'entraînement (4) comprenant une broche (6) pour convertir un mouvement de rotation en un mouvement de translation,
**caractérisé en ce que**
c) la broche est réalisée sous la forme d'une broche à ressort (6) et un dispositif d'entraînement (7) vient en prise dans une région de ressort (9) de la broche à ressort (6), de sorte qu'une rotation de la broche à ressort (6) ou du dispositif d'entraînement (7) autour d'un axe de rotation (5) conduise à un déplacement en translation relatif entre la broche à ressort (6) et le dispositif d'entraînement (7) dans la direction de l'axe de rotation (5).

2. Accoudoir selon la revendication 1, **caractérisé en ce que** la broche à ressort (6) montée notamment sur la partie de base (2)de manière à pouvoir être entraînée en rotation débouche au niveau d'une première extrémité axiale de la région de ressort (9) dans une première région d'arbre axiale (11), qui est reçue au moins en partie dans un mandrin (12) d'un entraînement en rotation (8) monté sur la partie de base (2).

3. Accoudoir selon la revendication 2, **caractérisé en ce que** la broche à ressort débouche au niveau d'une deuxième extrémité axiale de la région de ressort (9) dans une deuxième région d'arbre axiale (10) qui est montée à rotation sur la partie de base (2).

4. Accoudoir selon la revendication 1, **caractérisé en ce que** la broche à ressort (6) est réalisée sous la forme d'un ressort de traction ou de pression.

5. Accoudoir selon la revendication 1, **caractérisé en ce que** le dispositif d'entraînement (7) monté notamment sur la partie supérieure (3) est formé d'une tôle à ressort.

6. Accoudoir selon la revendication 1, **caractérisé en ce que** le dispositif d'entraînement (7) est réalisé en forme de U et présente deux branches de U (18, 19) qui viennent toutes les deux en prise dans la région de ressort (9), de sorte que le dispositif d'entraînement (7) coopère sans jeu avec la broche à ressort (6).

7. Accoudoir selon la revendication 6, **caractérisé en ce que** la région de ressort (9) est réalisée en forme de ressort à boudin et présente plusieurs spires et les branches du U (18, 19) viennent en prise des deux côtés de l'une des spires.
